# EUROPEAN PATENT SPECIFICATION

(11) **EP 0 884 952 B1**
(45) Date of publication and mention of the grant of the patent: **12.09.2001**
(21) Application number: 97908138.7
(22) Date of filing: 06.03.1997
(51) Int. Cl.: A23D 7/06

(54) **A PROCESS FOR PROTECTING FAT-BASED AQUEOUS EMULSION PRODUCTS AGAINST METAL-CATALYZED OXIDATION AND A PRODUCT THUS PROTECTED**
EIN VERFAHREN ZUM SCHUTZ VON WÄSSRIGEN EMULSIONSPRODUKTEN AUF FETTBASIS GEGEN OXIDATION DURCH METALLKATALYSATOREN, UND EIN SO GESCHÜTZTES PRODUKT
PROCEDE POUR LA PROTECTION DE PRODUITS EN EMULSION AQUEUX ET GRAS CONTRE L'OXYDATION PAR CATALYSEUR METALLIQUE ET PRODUIT AINSI PROTEGE

(30) Priority: 06.03.1996 DK 26196
(43) Date of publication of application: 23.12.1998
(73) Proprietor: Arla Foods amba, 8260 Viby J (DK)
(72) Inventor: ENGELL, Astrid, Margrethe, DK-8362 Horning (DK); MADSEN, S ren, DK-8230 Abyhoj (DK)
(74) Representative: Nyeng, Joergen
(86) International application number: DK9700099
(87) International publication number: WO9732485

(56) References cited:
- US-A- 2 494 114
- US-A- 4 765 927
- US-A- 4 906 412
- US-A- 4 963 385
- US-A- 5 230 916

## Description

The present invention relates to a fat-based aqueous emulsion product having a fat content of 10-95% by weight, preferably 20-82% by weight and more preferably 40-80% by weight, comprising oxidation-sensitive fats/-oils and conventional additions, including optionally conventional antioxidants and emulsifiers, said product being effectively protected against metal-catalyzed oxidation. The invention also relates to a process for protecting fat-based aqueous emulsion products of this type against metal-catalyzed oxidation.

### BACKGROUND OF THE INVENTION

It has frequently been assumed that problems of oxidation of fat-containing products primarily occur by wrong processing of fat/oil which form part of the raw materials of the product.

This is correct in fact, in the sense that a beginning oxidation of fat/oil used for production will continue in the finished product. High quality products cannot be made from poor raw materials.

For very oxidation-sensitive fats/oils having a great content of unsaturated fatty acids, in particular polyunsaturated fatty acids, a good raw material quality, however, is not enough. If these particularly sensitive fats/oils are not specially protected, a destructive oxidation of the finished product will be observed in a surprisingly short time.

Various factors, through their presence, separately increase the risk of oxidation of fats: light, heat, oxygen, enzyme activity and metal ions.

The exercise of a certain care in the handling of raw materials and in the production makes it possible to limit the presence of light, heat and oxygen to a level where these factors do not constitute a problem. Also the enzyme activity may be kept at an acceptable level partly by using raw materials of a sufficiently good quality and partly by maintaining a good hygiene in connection with raw materials and product or by heat treatment.

As regards metal ions, it has been found to be somewhat more difficult and frequently to take considerably more resources to keep the contamination caused by these at a level where they do not cause oxidation problems.

Usually, antioxidants are added to fats and oils to prevent oxidation and thereby rancidity of these. Such antioxidants are used in many different combinations, and sometimes a distinction is made between antioxidants proper and synergists for these. Further, several functions are ascribed to some additives; e.g. lecithins are used, which are a group of phospholipids, both as emulsifiers and as antioxidants.

A number of various combinations of antioxidants for use in fats as such is known. It is known e.g. from US Patent Specification No. 2 494 114 to stabilize fatty materials against oxidation by adding a mixture of
nordihydroguaiaretic acid (NDGA), 0.01-0.05%,
citric acid, 0.001-0.005%, and
lecithin, 0.01-0.05%.

According to the patent specification it is the stabilizing effect of NDGA which is to be enhanced, and the test results stated in column 2 show that citric acid as well as lecithin in the stated amounts have a synergistic effect together with NDGA. Nothing is said about special problems of metal-catalyzed oxidation.

US Patent Specification No. 5 230 916 relates to a process for producing an oil soluble antioxidant composition, comprising dissolving an ascorbic acid in a polar solvent, dissolving a phospholipid in a non-polar solvent, mixing the solvents, and removing the solvent from the mixture. The resulting composition, which is soluble in non-polar solvents, may then be combined with other antioxidant components, in particular with one or more antioxidants selected from citric acid, tocopherols and rosemary extract. The patent specification states the composition of antioxidants in a fish oil with the following percentages with respect to the oil: 0.05-0.2% by weight of tocopherols, 0.01-0.04% by weight of ascorbic acid, 0.01-0.04% by weight of citric acid and 0.1-0.4% by weight of de-oiled soy bean phospholipids (soy bean lecithin). The patent specification only mentions the combination of natural antioxidants which together have a synergistic effect, and mentions nothing about metal-catalyzed oxidation.

US Patent Specification No. 4 913 921 relates to food products containing fish oils stabilized with fructose. The food product comprises about 0,1 to 80 % by weight of a deodorized nonhydrogenated fish oil being substantially free of fish flesh, said fish oil containing (1) about 150 to 200 ppm of a fish oil stabilizing antioxidant and (2) about 1500 to 2000 ppm tocopherol; and the food product further comprises about 0,5 to 30 % by weight of fructose. According to the specification one important group of foods for which the described invention is paticularly suitable consists of emulsions comprising water and a triglyceride and, especially, stable emulsions which typically additionally comprise an emulsifier including both oil-in water and water-in-oil emulsion types. Among employable emulsifiers is mentioned hydroxylated lecithin. The food compositions may also include conventional oil stabilizing materials such as antioxidants, TBHQ, BHA or BHT. However, in column 5, lines 34 to 37 it is said that not all food approved antioxidants have been shown to help; for example, the use of lecithin has been shown to actually aggravate development of fish flavours. Preferred products include 10 to 150 ppm (based on total oil), preferably 100 to 150 ppm, of a chelating agent desirably selected from the group consisting of citric acid, phytic acid, ethylene diamine tetraacetate and mixtures thereof.

In the examples an antioxidant blend is used which is defined in Examples 1, 2 and 3 as follows:
- 60 % tocopherol
- 30 % TBHQ mixture comprising
   - 32 % glycerol monooleate
   - 30 % corn oil
   - 20 % TBHQ
   - 15 % propylene glycol
   - 3 % citric acid
- 10 % partially hydrogenated soybean oil with BHA.
The dosage of this antioxidant blend in the examples ranges from 0.02 weight % (Example 11) to 0,27 weight % (Example 7) and, thus, the maximum content of citric acid exemplified in a food product according to US Patent No. 4 913 921 is 0.0024 % by weigt of the product. There is no exemplification of any use of lecithin, and actually such use is warned against as noted above.

US Patent Specification No. 4 765 927 describes an anti-oxidizing composition for use in fat or oil, comprising one or more conventional antioxidants, in particular a mixture of tocopherol and a phospholipid, together with a condensed phosphate and citric acid as synergists. The examples use palm oil with a content of 0.02% of tocopherol, 0.001-0.1% of lecithin, 0.005-0.05% of various condensed phosphates and 0.0025% of citric acid. Metal-catalyzed oxidation is not mentioned here either.

US Patent Specification No. 4 906 412 describes a process for stabilizing lauric acid containing fats and oils against both hydrolytic and oxidative rancidity by addition of a chelating amount of citric acid and lecithin in an amount which provides 0.003-0.03% of active phospholipids based on the weight of the fat or the oil. It is stated in the patent specification that it is a desirable practice in the deodorization of fats and oils to add citric acid to the oil as a final step. According to the patent specification this takes place conventionally in an amount of about 0.002%, although as much as 0.01% may be used. It is usually added as an aqueous solution under vacuum so that the water evaporates. The citric acid serves as a metal chelator, in particular for traces of copper and iron which act as prooxidants for oil. However, in particular lauric acid-containing fats and oils, such as coconut oil and palm kernel oil, also tend to undergo hydrolytic rancidity in the presence of water. The problem of the presence of citric acid is that, in a concentrated aqueous solution, it can actually serve as a catalyst for the hydrolysis reaction and cause an increase in the percentage of free fatty acid. Therefore, lecithin is added as a moisture binder.

DE Patent Application, Publication No. 30 02 037 Al describes a whippable fat emulsion consisting of a mixture, emulsified in an aqueous medium, of (A) 90-98.5% by weight of a natural, optionally hardened vegetable fat, (B) 0.5-3% by weight, preferably 1-2% by weight of lecithin, (C) 1-5% by weight, preferably 2-3% by weight of a (C₆-C₂₂) fatty acid monoglyceride lactic acid ester, said aqueous medium containing (D) 0-2% by weight, preferably 0.2 1% by weight of one or more salts from the group Na pyrophosphate, Na hydrogencarbonate and Na citrate. The stated quantitative ratio of the fat/emulsifier mixture to the aqueous medium is 1:1.5 to 1:5, preferably 1:2 to 1:4. The combination of lecithin (B) and fatty acid monoglyceride lactic acid residues (C) serves as an emulsifier for the fat component (A). The salts (D), of which Na pyrophosphate is the preferred one, are mentioned as stabilizers. Nothing is said about special problems of metal-catalyzed oxidation or about any special effect of a combination of lecithin with citric acid. The single example uses 12.7% of lecithin and 0.15% of a salt mixture consisting of 53.7% of Na pyrophosphate, 43.9% of Na hydrogen carbonate and 2.4% of Na citrate based on the total emulsion; this means that the emulsion just contains 0.0036% of Na citrate.

US Patent Specification No. 4 963 385 describes food emulsions containing fish oils, where the water phase incorporates a stabilizer for the fish oil comprising a sugar or a sugar alcohol and optionally a metal ion chelator. Citric acid salts and ester thereof, e.g., are mentioned as useful metal chelators; but the only exemplified one is ethylene diamine tetra-acetic acid (EDTA).

US Patent Specification No. 4 772 483 describes a low calorific butter substitute comprising cream having a butter fat content of about 40%, non-fat dry milk, salt, locust bean gum, lecithin, mono- and diclycerides, citric acid, water and natural flavour. Lecithin is added as an emulsifier in an amount of 0.20% by weight and citric acid as an acidity adjusting agent in an amount of 0.10% by weight. Nothing is said about the shelf life of the product.

In any production of emulsified products, metal ion contaminations will occur to a greater or smaller degree.

These may e.g. originate from the water used, from milk or other milk based ingredients, from other protein sources, from salt or from other ingredients or additives in the product.

Particularly in emulsion products containing fats with many unsaturated fatty acids and particularly with many polyunsaturated fatty acids, the metal ions may give rise to a fast oxidation which will make the quality of the product in terms of smell and taste totally unacceptable in a surprisingly short time.

It is well-known that conventional antioxidants (tocopherols, BHA, BHT, NDGA, ascorbic acid and salts thereof, gallates, etc.) do not provide oxidation protection of any practical importance if a product contains an oxidation-sensitive fat/oil and is contaminated with metal ions.

To provide all ingredients in a form in which they do not contain metal ions of any practical importance will be difficult and expensive at best, and impossible at worst.

Particularly iron and copper ions are extreme oxidation promoters even in very low concentrations (few ppm for iron and few ppb for copper). It has therefore been common practice to complex-bind these metal ions in the water phase with ethylene diamine tetra-acetic acid (EDTA).

This has been found to be necessary particularly in emulsion products with a reduced fat content.

EDTA is an extremely effective water soluble metal chelator which on one hand effectively binds the harmful metal ions and on the other does not have any unfortunate side effects on the product, such as off-flavour, bad smell or discoloration.

However, in the EU EDTA will not be permitted for use in other emulsion products than emulsified sauces and minarine when the EU directive on other additives than colorants and sweeteners is implemented in the individual EU countries. Therefore, what is missing is a water soluble alternative with a similar effect and with a smell, taste and colour compatible to the same degree with the product which is to be protected. Such a protection will not be necessary in ordinary fat-based products containing fats which are not particularly sensitive to oxidation. The lower the fat content of the product is, and the more oxidation-sensitive the fat of the product is, the greater the need is for a protection against the metal-catalyzed oxidation, as a substitute for EDTA.

### SUMMARY OF THE INVENTION

It has surprisingly been found that a combination of citrate with lecithin effectively binds the harmful metal ions in the water phase of fat-based emulsion products and thereby provides the desired protection against metal-catalyzed oxidation in fat-based emulsion products, such as e.g. margarine and minarine.

Citrate added to the water phase in a concentration, calculated as citric acid, of at least about 0.01% by weight of the finished product together with lecithin in a concentration of at least about 0.05% by weight of the finished product has been found to have a metal-chelating effect which greatly exceeds what might be expected on the basis of the effect of the said substances used individually.

Accordingly, the fat-based aqueous emulsion product of the invention is unique in that it contains a combination of citrate and lecithin in amounts which protect the product effectively against metal-catalyzed oxidation, the amount of citrate being at least 0.01 % by weight calculated as citric acid and the amount of lecithin being at least 0.05 % by weight.

Generally, the emulsion product of the invention is to contain 0.01-1% by weight, preferably 0.05-1% by weight and more preferably 0.1-0.5% by weight, of citrate calculated as citric acid and 0.05-1% by weight, preferably 0.1-1% by weight and more preferably 0.1-0.5% by weight, of lecithin.

In practice, a safe protection against metal-catalyzed oxidation without any form of off-flavour is obtained when the emulsion product contains 0.2-0.4% by weight of citrate calculated as citric acid and 0.2-0.4% by weight of lecithin.

The process of the invention for protecting fat based aqueous emulsion products having a fat content of 10-95% by weight, preferably 20-82% by weight and more preferably 40-80% by weight, comprising oxidation-sensitive fats/oils and conventional additions, including optionally conventional antioxidants and emulsifiers, against metal-catalyzed oxidation, is unique by adding to the emulsion product during the production citrate and lecithin in amounts which in combination protect the product effectively against metal-catalyzed oxidation.

The citrate and the lecithin are generally added in the amounts stated above.

The citrate is normally added to the aqueous part prior to the emulsification. The preferred citrate is trisodium citrate, but the citrate my also be added in the form of citric acid, which is converted into citrate in the subsequent pH adjustment with a base, e.g. NaOH.

Preferably, a water soluble lecithin is used, and in that case it is also added to the aqueous part prior to the emulsification. But also fat soluble lecithins may be used, and in that case the lecithin is added to the fat part prior to the emulsification.

### DETAILED DESCRIPTION OF THE INVENTION

As mentioned, the present invention can protect fat-based emulsion products with a fat content of 10-95% by weight, preferably 20-82% by weight and more preferably 40-80% by weight against metal-catalyzed oxidation.

As a starting point, the invention is intended to protect products consisting of water-in-fat emulsions, but a person skilled in the art will appreciate that fat-in-water emulsions can be protected in the same manner.

The invention comprises adding a combination of:
- citrate and
- lecithin
in amounts which protect the product effectively against metal-catalyzed oxidation.

Citric acid is a tribasic acid with the pKₐ values 3.1, 4.8 and 6.4 for the three acid groups. This means that chemical equilibrium will occur between citric acid, the monobasic acid residue, the dibasic acid residue and the tribasic acid residue primarily in the pH range 2-7.5. It is rather complicated to calculate the ratio of the substances incorporated in the equilibrium, and the ratio is moreover affected by one or more of the substances occurring in the equilibrium.

In other words, in the emulsion products of the invention the citrate is an equilibrium mixture of citrate ions formed in situ by addition of citric acid or a mono-, di- or tribasic citrate salt and subsequent pH adjustment with base or citric acid.

The citrate may optionally also be a dibasic derivative of citric acid where one of the carboxyl groups of the citric acid is bound, e.g. in the form of an ester.

It is moreover conceivable that the citrate anion may be replaced by other anions of polybasic acids with a similar effect. The options include tartaric acid, malic acid, oxalic acid, malonic acid, succinic acid, glutaric acid, maleic acid, fumaric acid and phthalic acid.

Lecithin is a collective name of products which consist of a few well-defined substances and many more or less well-defined substances in varying amounts.

It is common to non-purified lecithin (crude lecithin) that about one half or more consists of phospholipids which have an emulsifying effect. Other substances present in crude lecithin are fats (about 35%), free fatty acids, glycolipids, tocopherols, sterols and carbohydrates. Most commercially available lecithins are prepared on the basis of soy beans, but lecithin is also found inter alia in rapeseed and yolk.

The phospholipids consist of glycerol with fatty acids bound in positions 1 and 2 and with phosphoric acid bound in position 3. In turn, the phosphoric acid has bound to it a substance which decides which type of phospholipid is involved. It is primarily:
choline (phosphatidyl choline, PC)
ethanolamine (phosphatidyl ethanolamine, PE)
inositol (phosphatidyl inositol, PI).

In crude lecithin prepared on the basis of soy beans, the content of the 3 substances varies as follows:

| | |
|---|---|
| PC | 12-18% |
| PE | 10-16% |
| PI | 7-12%. |

(Source: The brochure "Stern-Lecithin More than an Emulsifier", 1985 from Stern, a lecithin manufacturer). In some commercial products the content may vary more of course, depending on purification and modification.

The dosage of the individual lecithins, used in fat-based products in their function as emulsifiers, also varies much. Lecithin is frequently used together with other emulsifiers to give a special effect as anti-spattering in cooking margarines or as dough improvers in baking margarines.

Lecithins are generally fat soluble, but some lecithins are dispersible in water. Good results have been obtained with such a water dispersible lecithin in connection with the present invention, but also fat soluble lecithins have shown a good effect.

It is evident that a lecithin having a low natural content of iron and copper will be preferred in connection with the present invention.

The dosage of citrate is 0.01-1 % by weight, preferably 0.05-1 % by weight and more preferably 0.1-0.5 % by weight. The dosage of lecithin is 0.05-1 % by weight, preferably 0.1-1 % by weight and more preferably 0.1-0.5 % by weight.

A higher dosage of the ingredients singly or in combination may be used. It will not improve the effect noticeably, but, in contrast, can cause off-flavour in the finished product in some cases.

It may also be appropriate to use an additional antioxidant or antioxidant combination to protect the fat and the finished product. Usually, it will also be necessary to protect the physical stability of the finished product with at least one emulsifier in addition to lecithin.

Emulsion products of the present type will frequently have a pH value in the range 4.5-6.5. It may very well be changed, but a reduction of pH per se will increase the risk of oxidation of the product, and a higher pH will reduce the bacteriological shelf life. Finally, a change in pH will affect the taste of the product.

The invention will be illustrated more fully by the following product examples and test examples.

It is common to all the product examples that the emulsion is produced as follows:
- Fats and oils are weighed and molten together and heated to the desired emulsion temperature.
- Fat-based ingredients are added to the fat mixture in consideration of possible special processes for the addition of individual ingredients, as specified by the supplier.
- The complete tempered fat phase is transferred to an emulsion tank.
- The water phase is likewise weighed, mixed and tempered, and pH is not adjusted until all other ingredients have been mixed.
- The water phase is added to the fat phase in the emulsion tank with stirring.
- The emulsion is processed in the perfector system under the conditions which are specified for each individual product.

It applies to all the examples that the samples are produced on a Gerstenberg & Agger test perfector. The emulsion temperature was generally 45 °C, and the samples were made with a perfector capacity of about 20 kg/h and a cooling of -10 °C on 2 cooling pipes.

The following abbreviations are used in the examples below:
- ADM:: supplied by ADM Europoort B.V.
Elbeweg 125 - Harboor 5840
NL-3198 LC Europoort RT, NL
- AO:: supplied by Aarhus Oliefabrik A/S
M.P. Bruunsgade 27
DK-8000 Århus C, DK
- DI:: supplied by Danisco Ingredients, DK
Edwin Rahrsvej 38
DK-8220 Brabrand, DK
- LM:: supplied by Lucas Meyer GmbH & Co.
Ausschläger Elbdeich 62
D-20539 Hamburg, DE
- ST:: supplied by Stern-Chemie Volkmar Wywiol
An der Alster 81
D-20099 Hamburg, DE
- VM:: supplied by Vamo Mills
Prins Albertlaan 12
B-8870 Izegem, BE

### PRODUCT EXAMPLES

**Product example 1** (60% margarine)

### Water phase

38.59% water
1.0% salt
0.4% Na₃ citrate
0.01% butter flavouring 3175 (DI)
pH adjusted to 6.0 with citric acid

### Fat phase

59.19% fat mixture
0.4% lecithin "Vamothin SBX" (VM)
0.4% emulsifier "Dimodan® OT" (DI)
0.01% butter flavouring 2520 (DI)
10 ppm β-carotene

### Fat mixture:

10% fish oil
65% rapeseed oil
25% hardened soy bean oil "Shoguwar 41" (AO)

### Product example 2 (60% margarine)

### Water phase:

33.39% water
5.0% non-acidified buttermilk
1.0% salt
0.2% Na₃ citrate
0.4% lecithin "Emulfluid E" (LM)
0.01% butter flavouring 3175 (DI)
pH adjusted to 6.0 with citric acid

### Fat phase

59.59% fat mixture
0.4% emulsifier "Dimodan® OT" (DI)
0.01% butter flavouring 2806 (DI)
8 ppm β-carotene

### Fat mixture:

10% fish oil
65% rapeseed oil
25% hardened soy bean oil "Shoguwar 41" (AO)

### Product example 3 (80% mixed product)

### Water phase

8.7% water
10.0% non-acidified butter milk
1.0% salt
0.4% Na₃ citrate
pH adjusted to 5.8 with citric acid

### Fat phase

79.29% fat mixture
0.4% lecithin "Sternprime N-10 Top" (ST)
0.2% emulsifier "Dimodan® OT" (DI)
0.01% butter flavouring 2590 (DI)
8 ppm β-carotene

### Fat mixture: 10% butter fat

8% fish oil
20% coconut oil
30% hardened soy bean oil "Shoguwar 35" (AO)
32% rapeseed oil

### Product example 4 (liquid margarine)

### Water phase

11.40% water
5.0% non-acidified butter milk
1.0% salt
0.4% lecithin "Emulfluid E" (LM)
0.2% Na₃ citrate
pH adjusted to 5.8 with citric acid

### Fat phase

79.59% fat mixture
2.0% emulsifier "Grindsted® TS 209" (DI
0.4% emulsifier "Grindsted® CITREM LC" (DI)
0.01% butter flavouring 2469
5 ppm β-carotene
Fat mixture: 100% rapeseed oil

### Product example 5 (minarine)

### Water phase

58.09% water
1.0% salt
0.4% Na₃ citrate
0.01% buffer flavouring 4151 (DI)
pH adjusted to 6.0 with citric acid

### Fat phase

39.59% fat mixture
0.5% emulsifier "Dimodan® OT" (DI)
0.4% lecithin "Adlec" (ADM)
0.01% butter flavouring 4152 (DI)
5 ppm β-carotene

### Fat mixture:

25% hardened soy bean oil "Shoguwar 41" (AO)
15% fish oil
60% rapeseed oil

### Product example 6 (minarine)

### Water phase

50.19% water
5.0% non-acidified buttermilk
2.5% gelatine "Grindsted® G" (DI)
0.4% Na₃ citrate
0.4% lecithin "Emulfluid E" (LM)
0.01% butter flavouring 4151 (DI)
pH adjusted to 6.0 with citric acid

### Fat phase

39.99% fat mixture
0.5% emulsifier "Dimodan® OT" (DI)
0.01% butter flavouring 4152 (DI)
5 ppm β-carotene

### Fat mixture:

25% hardened soy bean oil "Shoguwar 41" (AO)
15% fish oil
60% rapeseed oil

### Product example 7 (70% fat spread)

### Water phase

28.4 % water
1.5 % salt
0.1 % Na₃ citrate
pH adjusted to 5,6 with citric acid

### Fat phase

69.68 % fat mixture
0.2 % emulsifier "Dimodan® LS" (DI)
0.02 % butter flavouring 2807 (DI)
0.1 % lecithin "Vamothin SBX" (VM)
10 ppm β-carotene

### Fat mixture:

5 % fish oil
65 % sunflower oil
30 % hardened soybean oil "Shoguwar 41" (AO)

### Product example 8 (65 % fat spread)

### Water phase

30.28 % water
1.9 % salt
2.5 % buttermilk powder
0.02 % butter flavouring 3175 (DI)
0.1 Na₃ citrate
0.2 % lecithin "Emulfluid E" (LM)
pH adjusted to 5.9 with citric acid

### Fat phase

64.78 % fat mixture
0.2 % emulsifier "Dimodan® LS" (DI)
0.02 % butter flavouring 2590 (DI)
6 ppm β-carotene

### Fat mixture:

7 % fish oil
65 % rapeseed oil
28 % hardened soybean oil "Shoguwar 41" (AO)

### Product example 9 (70 % fat spread)

### Water phase

26.28 % water
0.2 % Na₃ citrate
0.2 % lecithin "Emulfluid E" (LM)
1.8 % salt
1.0 % skimmed milk powder
0.5 % gelatine "Gelodan G" (DI)
0.02 % butter flavouring 3175 (DI)
pH adjusted to 6.0 with citric acid

### Fat phase

69.69 % fat mixture
0.3 % emulsifier "Dimodan OT" (DI)
0.01 % butter flavouring 2469 (DI)
8 ppm β-carotene

### Fat mixture:

5 % fish oil
65 % rapeseed oil
30 % hardened palm oil "Palmowar EE 42" (AO)

### Product example 10 (60 % fat spread)

### Water phase

33.45 % water
5.0 % buttermilk
1.0 % salt
0.15 % Na₃ citrate
0.4 % lecithin "Emulfluid E" (LM)
pH adjusted to 5.8 with citric acid

### Fat phase

59.6 % fat mixture
0.4 % emulsifier "Dimodan® LS" (DI)
0.01 % butter flavouring 2960 (DI)
8 ppm β-carotene

### Fat mixture:

11 % fish oil
22 % coconut oil
33 % hardened soybean oil "Shoguwar 35" (AO)
37 % rapeseed oil

It is evident to every one familiar with the production of products of this type that the production factors emulsion temperature, perfector capacity, cooling and number of cooling pipes as well as emulsifier type and flavour selection may be varied much, without this really changing anything of importance to the present invention.

Likewise, the selection of fats and oils in the products may vary indefinitely. It applies to many fat mixtures that the increased protection against metal-catalyzed oxidation provided by the present invention will not be necessary. Therefore, a changed selection of the vegetable oil used or of marine oil or an addition of one ore more animal oils or fats does not change the effect of the invention.

Finally, it will be without importance to the invention whether additives having another effect, such as hydrocolloids or the like which change meltdown or consistency, are added to the products.

As regards the shelf life of the products of the invention, it will be determined by other factors than the metal-catalyzed oxidation. (It will thus correspond to the shelf life of similar products without particularly oxidation-sensitive fats and/or oils).

### TEST EXAMPLES

To check the effect of the invention, a plurality of tests was performed with products artificially contaminated with copper and/or iron ions in the form of CuSO₄ and FeSO₄ (spiking) and with products made with ordinary tap water. For the sake of comparison, all the test products are 60% fat products with protein in the water phase and with about 10% of the fat phase consisting of unhardened fish oil. Unhardened fish oil has two advantages in this connection:
1) it must be considered one of the most oxidation-sensitive edible oils;
2) oxidized fish oil has an extremely unpleasant taste, which makes it easy to evaluate organoleptically whether a product with fish oil is oxidized.

All the samples were evaluated by a panel of trained tasters according to the following marking scale:
1: no fishy taste
2: very faint fishy taste
3: faint fishy taste
4: distinct fishy taste
5: strong fishy taste
6: distinct smell of fish and very unpleasant fishy taste

The samples are condemned as defective when all the tasters have given the mark 4 or above.

### Test example 1

Comparison of products without chelator, with EDTA and with Na₃ citrate + lecithin ("Emulfluid E"). Spiking: 0.5% ppm Fe⁺⁺ added to the water phase

| **EDTA** | **Na**_{**3**} **citrate** | **Lecithin** | **Defect after** |
|---|---|---|---|
| 0 | 0 | 0 | 3 days |
| 100 ppm | 0 | 0 | >6 weeks |
| 0 | 0.2% | 0.4% | >6 weeks |
| 0 | 0.4% | 0.4% | >6 weeks |

### Conclusion:

With 0.5 ppm Fe⁺⁺ the present invention is just as effective as EDTA in a test period of 6 weeks.

### Test example 2

Comparison of shelf life of samples with EDTA and with various dosages of Na₃ citrate and lecithin ("Emulfluid E"). Spiking: 2.5 ppm Fe⁺⁺ and 0.05 ppm Cu⁺⁺.

| **EDTA** | **Na**_{**3**} **citrate** | **Lecithin** | **Defect after** |
|---|---|---|---|
| 0 | | | 1 day |
| 100 ppm | | | >3 weeks |
| 0 | 0.4% | 0.4% | >3 weeks |
| 0 | 0.4% | 0.1% | 8 days |
| 0 | 0.6% | 0.1% | >3 weeks |
| 0 | 0.1% | 0.4% | >3 weeks |
| 0 | 0.1% | 0.6% | >3 weeks |
| 0 | 0.1% | 0.1% | 2 days |
| 0 | 0.6% | 0.6% | >3 weeks |

### Conclusion:

It seems that with the used extreme metal contamination of the products, 0.1 or 0.4% Na₃ citrate together with 0.1% lecithin is not enough to prevent metal-catalyzed oxidation, while 0.6% Na₃ citrate together with 0.1% lecithin and 0.4% Na₃ citrate together with 0.4% lecithin is. It should be noted that the amount of metal ions in this test was so high that the metal taste of the products was distinct. It must be assumed on the basis of this test that under normal circumstances 0.05% citrate together with 0.05% lecithin will be sufficient to provide good protection against metal-catalyzed oxidation, and in most cases 0.01% citrate together with 0.01% lecithin will give protection.

### Test example 3

Comparison of the effect of contaminating the water phase with 0.5 ppm Fe⁺⁺ vs. the effect of contaminating the finished emulsion with 2.5 ppm Fe⁺⁺. No chelator is used in the test.

| **Spiking** | **Defect after** |
|---|---|
| 0.5 ppm Fe⁺⁺ in the water phase | 3 days |
| 2.5 ppm Fe⁺⁺ in the emulsion | 7 days |

### Conclusion:

Metal contamination applied directly to the products in the emulsion does not affect the shelf life of the products to the same degree as metal contamination in the water phase. It may be concluded on the basis of this that metal contaminations applied through water or ingredients mixed in the water phase will be of greater importance to the shelf life of a product than metal contamination applied through fat, oil or ingredients mixed in the fat phase, and than metal contamination applied after the water-in-oil emulsion has been prepared. Consequently, a chelator combination like the present invented one capable of replacing the water soluble chelator EDTA will give the best protection against metal-catalyzed oxidation of fat-based products.

### Test example 4

Comparison of shelf life of samples with EDTA and Na₃ citrate + lecithin, respectively, prepared with ordinary tap water.

| **EDTA** | **Na**_{**3**} **citrate** | **Lecithin** | **Defect after** |
|---|---|---|---|
| 100 ppm | 0 | 0 | >12 weeks |
| 0 | 0.2% | 0.2% | >12 weeks |

### Conclusion:

Samples prepared with ordinary tap water and a combination of 0.2% Na₃ citrate and 0.2% lecithin exhibit the same stability against oxidation as samples prepared with the previously usual 100 ppm EDTA.

### Test example 5

Comparison of shelf life of samples with a low content of the chelator components, and without spiking.

| **EDTA** | **Na**_{**3**}**-citrate** | **Lecithin** | **Defect after** |
|---|---|---|---|
| - | - | - | <4 days |
| 100 ppm | - | - | >8 weeks |
| - | 0.05% | 0.01% | 4 weeks |
| - | 0.01% | 0.05% | 6 weeks |
| - | 0.05% | 0.05% | 6 weeks |

### Conclusion:

Samples containing as little as 0.01 % of either of the chelator components of this invention exhibit a significant prolonging of the shelf life compared to samples without any chelating agents.

### Test example 6:

The product of product example 10 was tested in comparison with a similar product containing EDTA instead of the chelator combination according to the invention.

| **EDTA** | **Na**_{**3**} **citrate** | **Lecithin** | **Defect after** |
|---|---|---|---|
| 100 ppm | - | - | >24 weeks |
| - | 0.15 | 0.4 | >24 weeks |

### Conclusion:

The product prepared in Production example 10 exhibits a shelf life as regards the development of a fishy off-taste comparable with a similar product containing EDTA.

## Claims

1. A fat-based aqueous emulsion product having a fat content of 10-95% by weight, preferably 20-82% by weight and more preferably 40-80% by weight, comprising oxidation-sensitive fats/oils and conventional additions, including optionally conventional antioxidants and emulsifiers, **characterized in that** it contains a combination of citrate and lecithin in amounts which protect the product effectively against metal-catalyzed oxidation, the amount of citrate being at least 0.01 % by weight calculated as citric acid and the amount of lecithin being at least 0.05 % by weight.

2. An emulsion product according to claim 1, **characterized in that** it comprises fats with polyunsaturated fatty acid residues.

3. An emulsion product according to claim 1 or 2, **characterized in that** it comprises fish oils.

4. An emulsion product according to any one of the preceding claims, **characterized in that** it contains 0.01-1 % by weight, preferably 0.05-1 % by weight and more preferably 0.1-0.5 % by weight, of citrate calculated as citric acid and 0.05-1 % by weight, preferably 0.1-1 % by weight and more preferably 0.1-0.5 % by weight, of lecithin.

5. An emulsion product according to claim 4, **characterized in that** it contains 0.2-0.4% by weight of citrate calculated as citric acid and 0.2-0.4% by weight of lecithin.

6. An emulsion product according to any one of the preceding claims, **characterized in that** the citrate is an equilibrium mixture of citrate ions formed in situ by addition of citric acid or a mono-, di- or tribasic sodium citrate and subsequent pH adjustment with NaOH or citric acid.

7. An emulsion product according to any one of the preceding claims, **characterized in that** the lecithin is a water soluble lecithin.

8. An emulsion product according to any one of the preceding claims, **characterized in that** it is a water-in-oil emulsion.

9. A process for protecting fat-based aqueous emulsion products having a fat content of 10-95% by weight, preferably 20-82% by weight and more preferably 40-80% by weight, comprising oxidation-sensitive fats/oils and conventional additions, including optionally conventional antioxidants and emulsifiers, against metal-catalyzed oxidation, **characterized by** adding to the emulsion product during the preparation citrate and lecithin in amounts which in combination protect the product effectively against metal-catalyzed oxidation.

10. A process according to claim 9, **characterized by** adding 0.01-1 % by weight, preferably 0.05-1 % by weight and more preferably 0.1-0.5 % by weight, of citrate calculated as citric acid and 0.05-1 % by weight, preferably 0.1-1 % by weight and more preferably 0.1-0.5 % by weight, of lecithin based on the total weight of the emulsion.

11. A process according to claim 10, **characterized by** adding 0.2-0.4% by weight of citrate calculated as citric acid and 0.2-0.4% by weight of lecithin based on the total weight of the emulsion.

12. A process according to any one of claims 9-11, **characterized by** adding the citrate to the aqueous part prior to the emulsification.

13. A process according to any one of claims 9-12, **characterized by** adding the citrate in the form of trisodium citrate.

14. A process according to any one of claims 9-13, **characterized by** adding the citrate in the form of citric acid which is added to the aqueous part prior to the emulsification and is converted into citrate salt in the subsequent pH adjustment.

15. A process according to any one of claims 9-14, **characterized in that** the lecithin is water soluble and is added to the aqueous part prior to the emulsification.

16. A process according to any one of claims 9-14, **characterized in that** the lecithin is fat soluble and is added to the fat part prior to the emulsification.

## Patentansprüche

1. Wässriges Emulsionsprodukt auf Fettbasis mit einem Fettgehalt von 10-95 Gew.-%, vorzugsweise 20-82 Gew.-% und mehr bevorzugt 40-80 Gew.-%, umfassend oxidationsempfindliche Fette/Öle und herkömmliche Zusätze, die gegebenenfalls herkömmliche Antioxidationsmittel und Emulgatoren einschließen, **dadurch gekennzeichnet**, dass es eine Kombination aus Citrat und Lecithin in Mengen enthält, welche das Produkt wirksam gegen eine Metall-katalysierte Oxidation schützen, wobei die Menge an Citrat mindestens 0,01 Gew.-%, berechnet als Citronensäure, beträgt und die Menge an Lecithin mindestens 0,05 Gew.-% beträgt.

2. Emulsionsprodukt nach Anspruch 1, **dadurch gekennzeichnet**, dass es Fette mit mehrfach ungesättigten Fettsäureresten umfasst.

3. Emulsionsprodukt nach Anspruch 1 oder 2, **dadurch gekennzeichnet**, dass es Fischöle umfasst.

4. Emulsionsprodukt nach einem der vorangehenden Ansprüche, **dadurch gekennzeichnet**, dass es 0,01-1 Gew.-%, vorzugsweise 0,05-1 Gew.-% und mehr bevorzugt 0,1-0,5 Gew.-% Citrat, berechnet als Citronensäure, und 0,05-1 Gew.-%, vorzugsweise 0,1-1 Gew.-% und mehr bevorzugt 0,1-0,5 Gew.-% Lecithin enthält.

5. Emulsionsprodukt nach Anspruch 4, **dadurch gekennzeichnet**, dass es 0,2-0,4 Gew.-% Citrat, berechnet als Citronensäure, und 0,2-0,4 Gew.-% Lecithin enthält.

6. Emulsionsprodukt nach einem der vorangehenden Ansprüche, **dadurch gekennzeichnet**, dass das Citrat eine Gleichgewichtsmischung aus Citrationen ist, welche in situ durch Zugabe von Citronensäure oder einem ein-, zwei- oder drei-basischen Natriumcitrat und anschließende pH-Einstellung mit NaOH oder Citronensäure gebildet wird.

7. Emulsionsprodukt nach einem der vorangehenden Ansprüche, **dadurch gekennzeichnet**, dass das Lecithin ein wasserlösliches Lecithin ist.

8. Emulsionsprodukt nach einem der vorangehenden Ansprüche, **dadurch gekennzeichnet**, dass es eine Wasser-in-Öl-Emulsion ist.

9. Verfahren zum Schützen von wässrigen Emulsionsprodukten auf Fettbasis mit einem Fettgehalt von 10-95 Gew.-%, vorzugsweise 20-82 Gew.-% und mehr bevorzugt 40-80 Gew.-%, umfassend oxidationsempfindliche Fette/Öle und herkömmliche Zusätze, die gegebenenfalls herkömmliche Antioxidationsmittel und Emulgatoren einschließen, gegen eine Metall-katalysierte Oxidation, **gekennzeichnet durch** das Zugeben von Citrat und Lecithin zu dem Emulsionsprodukt während der Herstellung in Mengen, welche in Kombination das Produkt wirksam gegen eine Metall-katalysierte Oxidation schützen.

10. Verfahren nach Anspruch 9, **gekennzeichnet durch** Zugeben von
0,01-1 Gew-%, vorzugsweise 0,05-1 Gew.-% und mehr bevorzugt
0,1-0,5 Gew.-% Citrat, berechnet als Citronensäure, und 0,05-1 Gew.-%, vorzugsweise 0,1-1 Gew.-% und mehr bevorzugt 0,1-0,5 Gew.-% Lecithin, bezogen auf das Gesamtgewicht der Emulsion.

11. Verfahren nach Anspruch 10, **gekennzeichnet durch** Zugeben von
0,2-0,4 Gew.-% Citrat, berechnet als Citronensäure, und 0,2-0,4 Gew.-% Lecithin, bezogen auf das Gesamtgewicht der Emulsion.

12. Verfahren nach einem der Ansprüche 9 bis 11, **gekennzeichnet durch** Zugeben des Citrats zu dem wässrigen Teil vor der Emulgierung.

13. Verfahren nach einem der Ansprüche 9 bis 12, **gekennzeichnet durch** Zugeben des Citrats in Form von Trinatriumcitrat.

14. Verfahren nach einem der Ansprüche 9 bis 13, **gekennzeichnet durch** Zugeben des Citrats in Form von Citronensäure, welche zu dem wässrigen Teil vor der Emulgierung zugegeben wird und bei der anschließenden pH-Einstellung in das Citratsalz umgewandelt wird.

15. Verfahren nach einem der Ansprüche 9 bis 14, **dadurch gekennzeichnet**, dass das Lecithin wasserlöslich ist und zu dem wässrigen Teil vor der Emulgierung zugegeben wird.

16. Verfahren nach einem der Ansprüche 9 bis 14, **dadurch gekennzeichnet**, dass das Lecithin fettlöslich ist und zu dem Fettteil vor der Emulgierung zugegeben wird.

## Revendications

1. Produit d'émulsion aqueuse à base de graisse ayant une teneur en graisse de 10 à 95 % en poids, de préférence 20 à 82 % en poids et de préférence encore 40 à 80 % en poids, comprenant des graisses/huiles sensibles à l'oxydation et des adjuvants traditionnels, incluant éventuellement des antioxydants et émulsifiants traditionnels, **caractérisé en ce qu'**il contient une combinaison de citrate et de lécithine en des quantités qui protègent le produit efficacement contre une oxydation catalysée par un métal, la quantité de citrate étant d'au moins 0,01 % en poids calculée en acide citrique et la quantité de lécithine étant d'au moins 0,05 % en poids.

2. Produit d'émulsion selon la revendication 1, **caractérisé en ce qu'**il comprend des graisses avec des résidus d'acide gras polyinsaturés.

3. Produit d'émulsion selon la revendication 1 ou 2, **caractérisé en ce qu'**il comprend des huiles de poisson.

4. Produit d'émulsion selon l'une quelconque des revendications précédentes, **caractérisé en ce qu'**il contient 0,01 à 1 % en poids, de préférence 0,05 à 1 % en poids et de préférence encore 0,1 à 0,5 % en poids de citrate, calculé en acide citrique, et 0,05 à 1 % en poids, de préférence 0,1 à 1 % en poids et de préférence encore 0,1 à 0,5 % en poids de lécithine.

5. Produit d'émulsion selon la revendication 4, **caractérisé en ce qu'**il contient 0,2 à 0,4 % en poids de citrate calculé en acide citrique et 0,2 à 0,4 % en poids de lécithine.

6. Produit d'émulsion selon l'une quelconque des revendications précédentes, **caractérisé en ce que** le citrate est un mélange d'équilibre d'ions citrates formé *in situ* par addition d'acide citrique ou d'un citrate de sodium mono-, di- ou tribasique, et réglage du pH subséquent avec NaOH ou de l'acide citrique.

7. Produit d'émulsion selon l'une quelconque des revendications précédentes, **caractérisé en ce que** la lécithine est une lécithine hydrosoluble.

8. Produit d'émulsion selon l'une quelconque des revendications précédentes, **caractérisé en ce qu'**il s'agit d'une émulsion eau-dans-huile.

9. Procédé pour protéger des produits d'émulsion aqueuse à base de graisse ayant une teneur en graisse de 10 à 95 % en poids, de préférence 20 à 82 % en poids et de préférence encore 40 à 80 % en poids, comprenant des graisses/huiles sensibles à l'oxydation et des adjuvants traditionnels, incluant éventuellement des antioxydants et émulsifiants traditionnels, contre une oxydation catalysée par un métal, **caractérisé par** l'addition au produit d'émulsion, pendant la préparation, de citrate et de lécithine en des quantités qui, combinées, protègent le produit efficacement contre une oxydation catalysée par un métal.

10. Procédé selon la revendication 9, **caractérisé par** l'addition de 0,01 à 1 % en poids, de préférence 0,05 à 1 % en poids et de préférence encore 0,1 à 0,5 % en poids de citrate, calculé en acide citrique, et 0,05 à 1 % en poids, de préférence 0,1 à 1 % en poids et de préférence encore 0,1 à 0,5 % en poids de lécithine par rapport au poids total de l'émulsion.

11. Procédé selon la revendication 10, **caractérisé par** l'addition de 0,2 à 0,4 % en poids de citrate calculé en acide citrique et 0,2 à 0,4 % en poids de lécithine par rapport au poids total de l'émulsion.

12. Procédé selon l'une quelconque des revendications 9 à 11, **caractérisé par** l'addition du citrate à la partie aqueuse avant l'émulsification.

13. Procédé selon l'une quelconque des revendications 9 à 12, **caractérisé par** l'addition du citrate sous la forme de citrate trisodique.

14. Procédé selon l'une quelconque des revendications 9 à 13, **caractérisé par** l'addition du citrate sous la forme d'acide citrique qui est ajouté à la partie aqueuse avant l'émulsification et est converti en sel citrate lors du réglage de pH subséquent.

15. Procédé selon l'une quelconque des revendications 9 à 14, **caractérisé en ce que** la lécithine est hydrosoluble et est ajoutée à la partie aqueuse avant l'émulsification.

16. Procédé selon l'une quelconque des revendications 9 à 14, **caractérisé en ce que** la lécithine est soluble dans une graisse et est ajoutée à la partie graisse avant l'émulsification.
